# DEMANDE DE BREVET EUROPEEN

(11) **EP 2 509 025 A1**
(43) Date de publication de la demande: **10.10.2012**
(21) Numéro de dépôt: 12163503.1
(22) Date de dépôt: 07.04.2012
(51) Int. Cl.: G06F 21/20

(54) **Procédé d'accès à une ressource protégée d'un dispositif personnel sécurisé**

(30) Priorité: 08.04.2011 FR 1153101
(71) Demandeur: Agence nationale des titres securises, 08101 Charleville-Mezieres (FR); Dictao, 75116 Paris (FR)
(72) Inventeur: Clemot, Olivier, 75116 Paris (FR); Bonningue, Gérard, 08101 Charleville-Mézières (FR)
(74) Mandataire: Le Cacheux, Samuel L.R.

(57) **Abrégé**

L'invention concerne un procédé d'accès au moyen d'un code identifiant (PIN) associé à un utilisateur (U) à au moins une ressource protégée d'un dispositif personnel sécurisé (CP) communicant avec une unité locale (UL) contrôlée par l'utilisateur (U), procédé d'accès comprenant les étapes suivantes :
- mise en oeuvre par l'unité locale (UL) d'un module intermédiaire (MI) de saisie du code identifiant (PIN),
- authentification, via le module intermédiaire (MI), du dispositif personnel sécurisé (CP) par le module tiers de confiance (MTC),
- en cas d'authentification positive du dispositif personnel sécurisé (CP) par le module tiers de confiance (MTC) :
- requête, par le module intermédiaire(MI), de saisie du code identifiant (PIN) par l'utilisateur (U),
- obtention par le module intermédiaire (MI) auprès du module tiers de confiance (MTC) d'au moins une clé de session sécurisée, faisant intervenir les étapes suivantes :
- envoi par le module intermédiaire (MI) à destination du module tiers de confiance (MTC) d'une preuve de connaissance du code identifiant (PIN) différente du code identifiant (PIN) et à usage unique,
- en cas de reconnaissance, par le module tiers de confiance (MTC), de la validité de la preuve de connaissance du code identifiant (PIN), génération, au moins par le module tiers de confiance (MTC), d'au moins une clé de session sécurisée au moyen d'informations secrètes associées au dispositif personnel sécurisé (CP),

- envoi de chaque clé de session sécurisée au module intermédiaire (MI).
- envoi au dispositif personnel sécurisé (CP), par le module intermédiaire (MI), du code identifiant (PIN) sous une forme sécurisée au moyen de chaque clé de session sécurisée.

## Description

La présente invention concerne le domaine technique des cartes à puce ou des dispositifs personnels sécurisés et, plus particulièrement, le domaine de l'accès à une ressource protégée d'une carte à puce.

Une carte à puce comprend généralement une ou plusieurs ressources permettant au détenteur ou à l'utilisateur de la carte de réaliser une ou plusieurs opérations au moyen de ladite carte à puce. Parmi les opérations susceptibles d'être effectuées au moyen d'une carte à puce, il est possible de citer des opérations de paiement, des opérations de signature, des opérations d'identification ou d'authentification, l'accès à un lieu ou un site protégé, ou encore un accès à des ressources informatiques sans que cette liste ne soit ni limitative, ni exhaustive. Afin d'éviter que ces opérations ne puissent être réalisées par un tiers en possession de la carte à puce mais qui n'en serait pas l'utilisateur ou le propriétaire légitime, l'exécution et/ou l'accès aux ressources de la carte à puce est protégé par un code identifiant connu seulement du propriétaire légitime et éventuellement d'une entité émettrice de la carte. Un même code identifiant peut permettre un accès à toutes les ressources protégées de la carte à puce ou à seulement certaines d'entre elles. Ainsi, il possible que la carte à puce ou le dispositif personnel sécurisé soit associée à plusieurs codes identifiants qui permettent chacun un accès à une partie seulement des ressources protégées de la carte à puce ou du dispositif personnel sécurisé.

Lorsque que l'utilisateur souhaite accéder ou mettre en oeuvre une ressource protégée de la carte à puce communiquant avec une unité locale, l'utilisateur saisit le code identifiant correspondant à ladite ressource sur un clavier de l'unité locale qui le transmet directement à la carte à puce pour vérification. En cas de vérification positive la carte à puce autorise l'accès à la ressource protégée. La transmission du code identifiant est, dans les systèmes connus, effectuée en clair de sorte qu'un tiers malveillant est susceptible de prendre connaissance du code identifiant en « écoutant » ou en enregistrant les communications de l'unité locale à destination de la carte à puce.

Cette faiblesse du système de mise en oeuvre des ressources protégées de la carte à puce est particulièrement gênante lorsque la carte à puce ou le dispositif personnel sécurisé est utilisé via une unité locale comprenant un ordinateur personnel relié à un réseau de télécommunications tel qu'un réseau local filaire ou hertzien ou un réseau étendu tel qu'internet. Un tel ordinateur personnel n'offre généralement pas des garanties d'intégrité permettant d'être certain que le code identifiant ne sera pas intercepté et donc que l'identité du propriétaire de la carte à puce ne sera usurpée en cas de vol de ladite carte à puce ou dudit dispositif personnel sécurisé.

II est donc apparu le besoin d'un nouveau système ou procédé d'accès aux ressources protégées d'une carte à puce ou d'un dispositif personnel sécurisé qui offre des garanties de confidentialité et de protection du code identifiant supérieures à celles des systèmes selon l'art antérieur.

Afin d'atteindre cet objectif, l'invention concerne un procédé d'accès au moyen d'un code identifiant associé à un utilisateur à au moins une ressource protégée d'un dispositif personnel sécurisé communicant avec une unité locale contrôlée par l'utilisateur. Selon l'invention, ce procédé d'accès comprend les étapes suivantes :
- mise en oeuvre par l'unité locale d'un module intermédiaire de saisie du code identifiant,
- authentification, via le module intermédiaire, du dispositif personnel sécurisé par le module tiers de confiance,
- en cas d'authentification positive du dispositif personnel sécurisé par le module tiers de confiance :
- requête, par le module intermédiaire, de saisie du code identifiant par l'utilisateur,
- obtention par le module intermédiaire auprès du module tiers de confiance d'au moins une clé de session sécurisée, faisant intervenir les étapes suivantes :
   - envoi par le module intermédiaire à destination du module tiers de confiance d'une preuve de connaissance du code identifiant différente du code identifiant et à usage unique,
   - en cas de reconnaissance, par le module tiers de confiance, de la validité de la preuve de connaissance du code identifiant, génération, au moins par le module tiers de confiance, d'au moins une clé de session sécurisée au moyen d'informations secrètes associées au dispositif personnel sécurisé,
- envoi de chaque clé de session sécurisée au module intermédiaire,
- envoi au dispositif personnel sécurisé, par le module intermédiaire, du code identifiant sous une forme sécurisée au moyen de chaque clé de session sécurisée.

Au sens de l'invention, un dispositif personnel sécurisé (en anglais Personal Security Device, PSD) est un dispositif électronique portable comprenant des ressources matérielles de calcul, de mémoire, de cryptographie et de communication adaptées pour intervenir notamment dans des protocoles d'identification, d'authentification, de signature électronique, de chiffrement, de contrôle d'accès sans que cette liste ne soit limitative ou exhaustive. A titre d'exemples de dispositifs personnels sécurisés, il est possible de citer : les cartes à puce, les cartes à circuit intégré, les dispositifs portables de stockage de données, les modules d'identification d'abonné (SIM pour Subscriber Identification Module en anglais), les modules d'identification sans fil, les clés USB, les jetons d'identification électronique, les modules d'applications sécurisées (SAM pour Secure Application Module en anglais), les modules matériel de sécurité (HSM pour Hardware Security Module en anglais), les puces TPG de l'alliance Trusted Computing Group ainsi que tout système électronique personnel comprenant un ou plusieurs des dispositifs précités. Par ailleurs, il peut être précisé qu'au sens de l'invention, une carte à puce CP est un dispositif électronique tel que, par exemple, défini par, d'une part, la norme ISO 7816 pour ce qui concerne les cartes à puce à contact et, d'autre part, la norme ISO 14443 pour ce qui concerne les cartes à puce sans contact de proximité. II est également possible de se reporter à l'ouvrage « Les cartes à puce - théorie et mise en oeuvre » de Christian TAVERNIER - Dunod éditeur - 2^{ème} édition pour tout ce qui concerne les définitions et les outils utilisables pour la mise en oeuvre des cartes à puce.

Au sens de l'invention, un code identifiant est équivalant à un code PIN pour Personal Identification Number, en anglais.

L'authentification du dispositif personnel sécurisé préalablement à la saisie du code identifiant, permet de garantir que le dispositif personnel sécurisé est bien présent et authentique lorsque le module intermédiaire émet la requête de saisie du code identifiant. Ainsi, en absence de carte authentique, le module intermédiaire n'émet pas la requête de saisie du code identifiant et le module tiers de confiance n'acceptera pas de vérifier une preuve de connaissance du code identifiant qui lui serait présenté sans avoir précédemment authentifié la carte à travers le même canal. L'authentification préalable du dispositif personnel sécurisé protège contre les attaques sur le code identifiant par un tiers qui se ferait passer pour un module intermédiaire sans posséder de dispositif personnel sécurisé authentifié.

Au sens de l'invention, le fait que l'authentification du dispositif personnel sécurisé est effectuée via le module intermédiaire signifie que le module intermédiaire sert de relai ou de passerelle aux communications entre le dispositif personnel sécurisé et le module tiers de confiance. Ainsi, le module tiers de confiance se trouve, pendant la mise en oeuvre du procédé selon l'invention, en relation avec le binôme formé du dispositif personnel sécurisé et du module intermédiaire.

De plus, la mise en oeuvre du module intermédiaire de saisie du code identifiant permet de confiner la diffusion en clair du code identifiant au seul module intermédiaire qui est, de préférence, adapté pour capter directement la saisie du code identifiant ou pin effectuée au moyen d'une interface homme machine de l'unité locale. Ensuite, l'obtention d'une clé de session sécurisée auprès d'un tiers de confiance permet de transmettre le code identifiant au dispositif personnel sécurisé sous une forme sécurisée qui garantit qu'en cas d'écoute des communications, entre le dispositif personnel sécurisé et l'unité locale, par un tiers malveillant, ce dernier ne pourra pas accéder facilement voire ne pourra pas accéder à la connaissance du code identifiant. Par ailleurs, la génération de chaque clé de session par le tiers de confiance permet d'éviter la fourniture des outils nécessaires à la création des clés de sessions sécurisées aux utilisateurs ainsi qu'une divulgation du mode de création des clés de session sécurisées.

L'invention permet donc de garantir l'origine des clés de session. Ainsi dans un processus où l'accès à la ressource protégée du dispositif personnel sécurisé permet une utilisation d'un service ou une transaction auprès d'un prestataire, le simple fait que l'utilisateur ait pu accéder ou autoriser l'accès à la ressource protégée est une indication pour le prestataire que l'utilisateur appartient à l'ensemble des utilisateurs capables d'obtenir une clé de session sécurisée auprès du tiers de confiance. II est à noter que le fait que chaque clé de cession est générée au moyen d'informations sécrète associées dispositif personnel sécurisé permet de garantir que seul le dispositif personnel sécurisé pourra mettre en oeuvre chaque clé de cession sécurisée ce qui fait obstacle aux attaques du type homme du milieu (Man in the middle, en anglais). De plus, la mise en oeuvre d'informations secrètes pour la génération des clés de session sécurisée permet utiliser des protocoles de sécurisation robustes comme par exemple des algorithmes cryptographique à clé secrète tels que le DES et l'AES ou des algorithmes à clé publique, comme le RSA, utilisé avec des clés de session à usage unique.

Ainsi, lors de la mise en oeuvre de l'invention:
- aucune donnée confidentielle permanente, telle que les secrets pour la génération des clés de session sécurisée, n'est stockée à l'intérieur du module intermédiaire, de sorte que ces données confidentielles sont protégées contre un risque de vol ou de corruption par une analyse technique du module intermédiaire,
- la valeur du code identifiant ne transite jamais sous une forme non protégée en dehors du module intermédiaire, dans la mesure où, d'une part, c'est une preuve de connaissance et non sa valeur directe qui est utilisée, et, d'autre part, les clés de sessions permettant de tester si un code identifiant est correct en le soumettant sous une forme chiffrée au dispositif personnel sécurisé ne peuvent être obtenue auprès du module tiers de confiance par un module intermédiaire autre que celui ayant démontré tout à la fois être en liaison directe avec le dispositif personnel sécurisé et avoir connaissance du code identifiant à travers la fourniture de la preuve de connaissance.
Cette combinaison offre au procédé selon l'invention l'avantage de présenter une grande résistance aux attaques extérieures.

Dans le sens d'un renforcement de la sécurité pour le prestataire de service, la mise en oeuvre d'un module tiers de confiance peut en outre être mise à profit pour effectuer une authentification ou identification de l'utilisateur préalablement à la délivrance de la clé de session sécurisée. Ainsi, selon une forme de mise en oeuvre de l'invention, le procédé comprend une identification ou authentification de l'utilisateur par le module tiers de confiance et l'obtention de chaque clé de session sécurisée n'intervient qu'en cas d'authentification ou d'identification positive de l'utilisateur par le module tiers de confiance. L'identification de l'utilisateur peut être effectuée par tout moyen approprié et par exemple au moyen de données biométriques de l'utilisateur. L'identification de l'utilisateur peut également être effectuée à partir d'informations issues d'un document autre que le dispositif personnel sécurisé, comme par exemple un numéro d'une carte d'identité. Dans ce cas, l'identification de l'utilisateur se trouve renforcée par rapport à l'identification de l'utilisateur qui résulte de la possession du dispositif personnel sécurisé et de la connaissance du code identifiant que l'utilisateur est normalement le seul à connaître.

Selon l'invention, le module tiers de confiance peut être un module implémenté au niveau de l'unité locale soit en étant intégré à cette dernière soit en communiquant directement avec cette dernière. Le module tiers de confiance peut, par exemple, être intégré dans un module matériel de sécurité. Selon l'invention, le module tiers de confiance peut au contraire être un module distant avec lequel le module intermédiaire communique via un réseau de télécommunication. Au sens de l'invention, un réseau de télécommunication est un réseau local et/ou étendu permettant une communication moyenne ou grande distance entre des systèmes informatiques. Un réseau local et/ou étendu fonctionnant selon le protocole TCP/IP constitue un exemple de réseau de télécommunications au sens de l'invention. Dans ce cadre, le réseau Internet constitue également un exemple de réseau étendu formant un réseau de télécommunication au sens de l'invention.

Selon une caractéristique de l'invention visant à renforcer la sécurité, les échanges entre le module intermédiaire et le module tiers de confiance peuvent être effectués par une liaison sécurisée dès les premiers échanges avant même l'authentification du dispositif personnel sécurisé et la présentation de la preuve de connaissance du code identifiant. Parmi les protocoles susceptibles d'être utilisés pour la mise en place d'une telle liaison sécurisée il est possible de citer le protocole TLS pour « Transport Layer Security » en anglais, anciennement appelé SSL pour « Secure Sockets Layer » en anglais.

Selon une variante de cette caractéristique, la liaison sécurisée est établie avec une authentification du module tiers de confiance par un certificat émis dans le cadre d'une infrastructure à clé publique. Une telle infrastructure à clé publique est aussi appelée PKI pour « Public Key Infrastructure » en anglais.

Selon une caractéristique de l'invention, l'authentification du dispositif personnel sécurisé est effectuée dans le cadre d'une authentification réciproque du dispositif personnel sécurisé et du module tiers de confiance. Cette caractéristique renforce les caractéristiques d'authentification du procédé selon l'invention dans la mesure où il y a, d'une part, une authentification du module intermédiaire par le module tiers de confiance qui permet notamment une authentification et/ou une identification du couple l'unité locale/utilisateur et, d'autre part, une authentification du dispositif personnel sécurisé par le module tiers de confiance ce qui permet en combinaison une authentification et/ou identification de l'ensemble unité locale/utilisateur/dispositif personnel sécurisé.

Selon une variante de cette caractéristique de l'invention, l'authentification réciproque est effectuée selon un protocole de challenge cryptographique de type défi-réponse.

Selon une forme de mise en oeuvre de l'invention, la transmission de la preuve de connaissance est effectuée selon un protocole de type à divulgation nulle de connaissance. Un tel protocole, désigné en anglais sous la dénomination de « zero-knowledge protocol », permet comme son nom l'indique de vérifier la connaissance mutuelle d'une information, généralement un secret, par deux systèmes distincts sans communication de l'information en elle-même. Ainsi, cette forme de mise en oeuvre annule les risques de prise de connaissance du code identifiant par un tiers malveillant qui aurait accès aux informations échangées par le module intermédiaire et le module tiers de confiance.

Selon une caractéristique de cette forme de mise en oeuvre, une liaison sécurisée entre le module intermédiaire et le module tiers de confiance peut être établie, après saisie du code identifiant, selon un protocole renforcé d'échange de clé authentifié par mot de passe dans lequel l'authentification du module intermédiaire est effectuée à partir d'un élément d'authentification calculé à partir du code identifiant, le module tiers de confiance possédant une copie de l'élément d'authentification. Un tel protocole renforcé d'échange de clé authentifié par mot de passe, également connu sous la dénomination « Augmented Password Authenticated Key Exchange » (Augmented PAKE). Ainsi dans l'hypothèse où un tiers malveillant aurait connaissance des informations détenues par le module tiers de confiance ou arriverait à faire réaliser au module tiers de confiance des opérations sans avoir démontré au préalable une connaissance du code identifiant, ce tiers malveillant n'ayant accès qu'à l'élément d'authentification, distinct du code identifiant, ne pourra pas se connecter à la carte à puce pour accéder à la ressource protégée, s'il n'a découvert le code identifiant en lui-même. En effet, dans cette forme de mise en oeuvre, même quand la longueur du code identifiant n'est pas suffisante pour empêcher les attaques par force brute, un tiers malveillant ayant réussi à se substituer au module tiers de confiance et ainsi récupéré la valeur de preuve de possession du code identifiant ne pourrait pas, par une attaque de force brute, retrouver la valeur du code identifiant à partir de la preuve de possession.

Dans cette forme de mise en oeuvre, la liaison sécurisée obtenue pourra être utilisé pour chiffrer les clés de session envoyées au module intermédiaire et comme les éléments de cette sécurisation sont dépendants de la valeur du code identifiant, cela garantit dans n'importe quel cas de figure que le module intermédiaire capable de recevoir cette valeur a obligatoirement déjà connaissance du code identifiant. Cela interdit par exemple à un tiers malveillant ayant réussi en se placer en position d'homme du milieu, dans la liaison avec le module tiers de confiance, de récupérer les clés de session sans avoir connaissance du code identifiant et de les utiliser ensuite pour déchiffrer le message transmis au dispositif personnel sécurisé.

Selon une autre caractéristique de l'invention, le module tiers de confiance peut comprendre un module de contrôle de la connaissance du code identifiant et un module de génération de clé de session sécurisée. Cette dissociation des deux fonctions du module tiers de confiance permet d'augmenter la sécurité.

Selon une variante de cette caractéristique, que le module de contrôle de la connaissance du code identifiant communique avec le module de génération de clé de session sécurisé via une liaison sécurisée à authentification mutuelle.

Ainsi, il peut être envisagé que les communications entre la carte à puce et le module tiers de confiance ainsi qu'entre le module intermédiaire et le module tiers de confiance ne soit gérées que par le module de contrôle de connaissance de sorte que les informations en provenance du module de génération de clé de session sécurisée transitant par le module de contrôle de connaissance. Selon une variante de cette caractéristique le module intermédiaire communique donc uniquement avec le module de contrôle de connaissance du module tiers de confiance. Ainsi, l'accès aux informations secrètes détenues par le module de génération de clé de session sécurisée est rendu plus difficile.

Selon une caractéristique de l'invention visant à augmenter la sécurité du procédé, le module tiers de confiance peut être en partie au moins intégré dans un module matériel de sécurité également appelé HSM pour Hardware Security Module en anglais.

Selon une variante de cette caractéristique, le module de génération de clé de session sécurisée et/ou le module de contrôle de connaissance est intégré dans un module matériel de sécurité.

Selon une autre caractéristique de l'invention visant également à renforcer la sécurité, le module de contrôle de connaissance et le module de génération de clé de sessions peuvent être implantés chacun sur deux serveurs distincts.

Selon encore une autre caractéristique de l'invention, le module de contrôle de connaissance peut être adapté pour mémoriser les envois de preuve de connaissance et pour refuser les transactions en fonction d'un nombre d'échec déterminé et/ou de règles de sécurité. Un tel enregistrement de l'historique des transactions et/ou des communications permet de mettre en oeuvre des règles de sécurité faisant obstacle aux attaques par force brute ou par dictionnaire notamment.

Selon une variante de cette autre caractéristique de l'invention, le module de contrôle de connaissance est associé à un module de détection des fraudes adapté pour mémoriser l'identifiant utilisé à chaque envoi de preuve de connaissance et le résultat du contrôle de connaissance et pour communiquer au module de contrôle de connaissance une autorisation de communication avec le module intermédiaire en fonction de l'identifiant et du ou des résultats des contrôle des connaissances.

Dans le même sens, le module tiers de confiance peut mettre en oeuvre une contre-mesure visant à rendre le temps de réponse du tiers de confiance indépendant du résultat du test de validité de la preuve de connaissance.

Selon l'invention, la saisie du code identifiant à destination du module intermédiaire peut être réalisée par tout moyen approprié et notamment au moyen d'un clavier de l'unité locale. Selon une forme de mise en oeuvre de l'invention, la saisie du code identifiant est effectuée au moyen d'une interface graphique affichant un clavier virtuel sur un écran de l'unité locale et d'une interface de pointage permettant à l'utilisateur de sélectionner des caractères du clavier virtuel. Cette caractéristique de l'invention vise à limiter des risques de divulgation du code identifiant par « écoute » des informations émises par un clavier et notamment un clavier sans fil.

Au sens de l'invention, une interface de pointage est un dispositif matériel permettant de sélectionner une zone ou une partie d'une information visuelle ou image affichée par l'interface graphique. Parmi les interfaces de pointage, il est possible de citer les souris, trackball ou analogue, les trackpads, les tablettes graphiques ou de digitalisation ou encore les écrans tactiles sans que cette liste ne soit ni limitative, ni exhaustive.

L'invention concerne également un dispositif informatique comprenant des moyens de communication avec un dispositif personnel sécurisé, des moyens d'interface homme-machine et des moyens de communication avec un module tiers de confiance, caractérisé en ce que le dispositif informatique comprend un module intermédiaire adapté pour mettre en oeuvre le procédé selon l'invention.

L'invention concerne aussi un dispositif informatique susceptible de former une unité locale comprenant des moyens de communication avec un dispositif personnel sécurisé, des moyens d'interface homme machine et des moyens de communication avec un module tiers de confiance, ce dispositif informatique étant adapté pour mettre en oeuvre le procédé, selon l'invention, d'accès à une ressource protégée d'un dispositif personnel sécurisé.

Bien entendu, les différentes caractéristiques, variantes et formes de mise en oeuvre du procédé de contrôle d'accès selon l'invention, peuvent être associées les unes avec les autres selon diverses combinaisons dans la mesure où elles ne sont pas incompatibles ou exclusives les unes des autres.

Par ailleurs, diverses autres caractéristiques de l'invention ressortent de la description annexée effectuée en référence aux dessins qui illustrent une forme non limitative du procédé et du système, selon l'invention, de contrôle d'accès à une ressource protégée d'un dispositif personnel sécurisé.

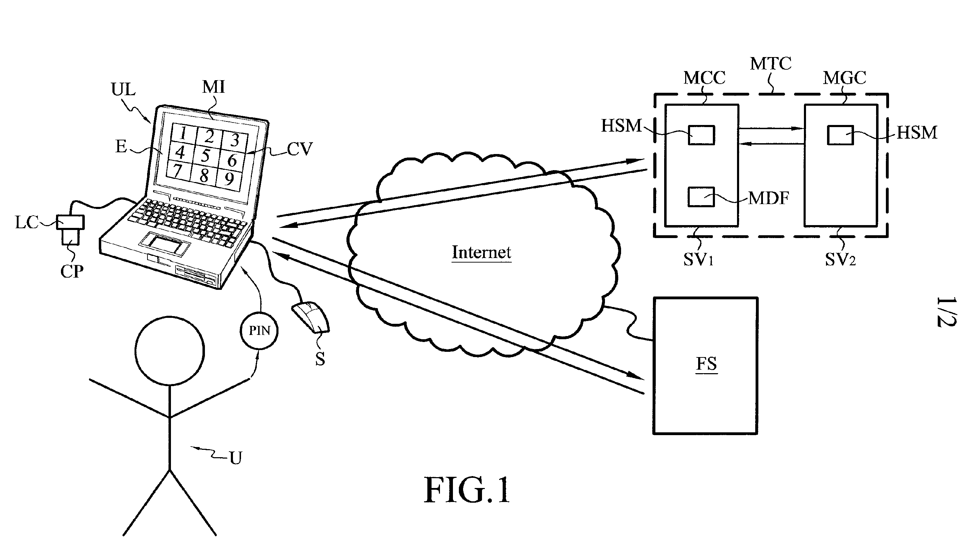

- La figure 1 est une vue schématique d'un système ou d'une infrastructure informatique pour la mise en oeuvre du procédé selon l'invention.
- La figure 2 est un schéma de principe des différents échanges d'information dans une forme préférée de mise en oeuvre du procédé selon l'invention.

Un système pour la mise en oeuvre de l'invention comprend une unité locale UL qui comprend de manière connue en soi des moyens de calcul informatique ainsi que des moyens de stockage temporaire et /ou permanent de données. L'unité locale UL comprend également des moyens d'interfaces homme machine permettant à un utilisateur U de contrôler l'unité locale UL. Les moyens d'interfaces homme machine peuvent par exemple comprendre un clavier C, un écran E et une souris S. L'unité locale UL comprend également une interface de communication avec un réseau de télécommunications comme par exemple une interface filaire et/ou radio de type Ethernet pour une communication selon le protocole TCP/IP sur le réseau Internet. L'unité locale pourrait également comprendre des moyens de communication avec un réseau de télécommunications commuté comme le réseau téléphonique. Selon l'invention, l'unité locale UL est adaptée pour communiquer avec un dispositif personnel sécurisé CP qui dans le cadre de l'exemple décrit est une carte à puce. Bien entendu, le dispositif personnel sécurisé peut être d'un autre type. II doit être noté que les termes « dispositif personnel sécurisé » et « carte à puce » sont utilisés indifféremment et sont considérés, sauf indication contraire, comme équivalents et interchangeables au sens de l'invention.

L'unité locale comprend également des moyens de communication LC avec un dispositif personnel sécurisé CP comme par exemple un lecteur de carte à puce CP à contacts. Bien entendu, l'unité locale UL pourrait également comprendre des moyens de communication radio ou optique avec un dispositif personnel sécurisé CP sans contact.

L'unité locale UL peut par exemple être formée par un ordinateur personnel ou encore par un terminal de paiement dans la mesure où elle comprend des moyens de communication LC avec un dispositif personnel sécurisé CP.

Selon un exemple d'une possible mise en oeuvre de l'invention, l'utilisateur U détenteur du dispositif personnel sécurisé CP souhaite utiliser des services en ligne offerts par un fournisseur de services FS, l'accès à ces services étant contrôlé et nécessitant une authentification forte au moyen de ressources du dispositif personnel sécurisé CP. Afin d'éviter une utilisation malveillante du dispositif personnel sécurisé, la ressource nécessaire à l'accès aux services du fournisseur FS est protégée par un code identifiant PIN gardé secret par l'utilisateur U. Afin de permettre l'accès ou la mise en oeuvre de la ressource protégée du dispositif personnel sécurisé CP il est nécessaire de transmettre à ce dernier le code identifiant PIN.

L'invention propose d'éviter tout risque de « fuites » du code identifiant PIN au sein de l'unité locale UL et de ses divers raccordements, d'une part, au dispositif personnel sécurisé CP et, d'autre part, aux réseaux de télécommunication en mettant en oeuvre, au niveau de l'unité locale, un module intermédiaire MI destiné, notamment, à permettre la saisie du code identifiant PIN et à assurer la communication sous forme sécurisée du code identifiant PIN au dispositif personnel sécurisé CP. Selon l'invention, le module intermédiaire MI sert en outre de passerelle pour les communications entre le module personnel sécurisé CP et le module tiers de confiance MTC.

Le module intermédiaire MI est un module logiciel et/ou matériel qui est activé au plus tard juste avant le besoin d'accès à la ressource protégée du dispositif personnel sécurisé CP et plus généralement juste après la mise en place de la carte à puce CP dans le lecteur LC.

Selon l'invention, le module intermédiaire MI obtient au moins une clé de session sécurisée, nécessaire à la transmission sécurisée du code identifiant au dispositif personnel sécurisé CP, auprès d'un module tiers de confiance MTC qui, selon l'exemple illustré, est distant et communique avec le module intermédiaire MI via le réseau de télécommunications Internet.

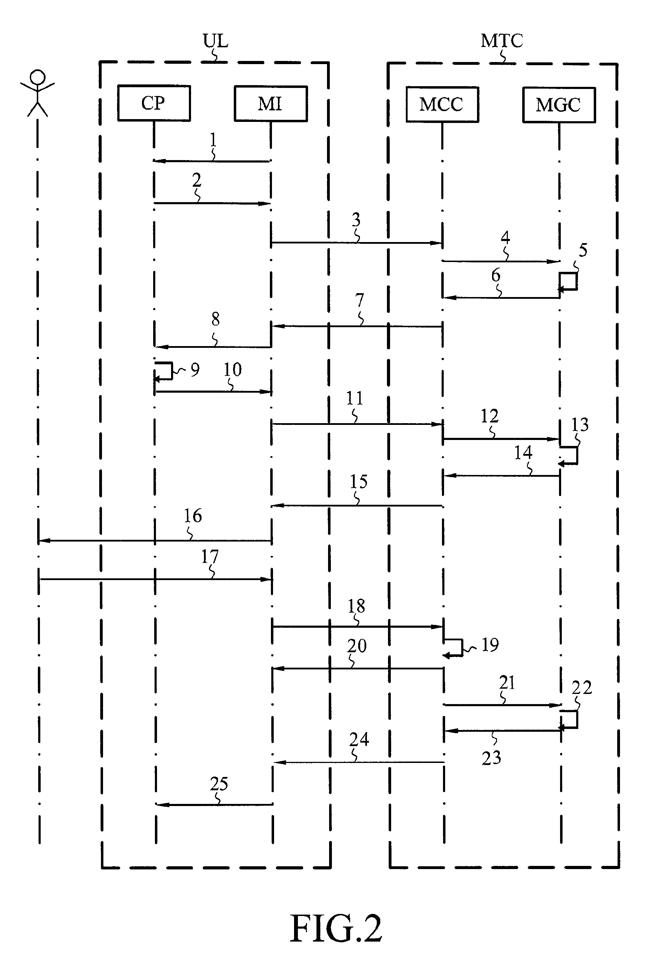

Selon une forme préférée mais non exclusive de mise en oeuvre du procédé conforme à l'invention, l'accès protégé par le code identifiant PIN à la ressource protégée du dispositif personnel sécurisé CP se déroule selon la séquence suivante plus particulièrement illustrée à la figure 2.

Tout d'abord, il est procédé à une authentification de la carte à puce CP par le module tiers de confiance MTC. En effet, il faut s'assurer de la présence d'une carte à puce authentique afin d'éviter que l'utilisation d'une carte à puce leurre ne permette de déclencher la mise en oeuvre du procédé selon l'invention et par suite son analyse. La séquence d'authentification de la carte à puce correspond aux étapes 1 à 13 de la figure 2 comme cela apparaitra par la suite.

Selon l'exemple illustré, le module tiers de confiance MTC comprend, d'une part, un module de contrôle de connaissance MCC et, d'autre part, un module de génération de clés de session sécurisée MGC. Dans le cas présent, le module de contrôle de connaissance MCC et le module de génération de clés de session sécurisée MGC sont mis en oeuvre sur deux serveurs distincts, respectivement SV1 et SV2, et, de préférence, chacun implanté en partie au moins dans un module matériel de sécurité HSM du serveur correspondant. Les serveurs SV1 et SV2 sont bien entendu adaptés pour gérer des requêtes simultanées émanant de modules intermédiaires MI distincts activés sur différentes unités locales UL connectées au réseau Internet

Le module de contrôle de connaissance MCC assure une fonction gestion des communications directes avec chaque module intermédiaire MI et de relai des communications à destination du module de gestion des clés de session sécurisée MGC. Ainsi, chaque module intermédiaire MI communique avec un module de gestion des clés de session sécurisée MGC uniquement par l'intermédiaire du module de contrôle de connaissance MCC faisant office de serveur mandataire (en anglais proxy). Les communications entre le module de gestion des clés de session sécurisée MGC et le module de contrôle de connaissance seront de préférence réalisées dans le cadre d'une liaison sécurisée avec authentification mutuelle.

Le module de gestion de cession des clés de cession sécurisée MGC assure également une fonction d'authentification de la carte à puce CP comme cela ressort de ce qui suit.

Selon l'exemple illustré, l'authentification de la carte à puce CP est effectuée dans le cadre d'une authentification réciproque de la carte à puce CP et du module tiers de confiance MTC qui résulte de l'établissement d'un canal de communication sécurisée entre la carte à puce CP et le module tiers de confiance MTC et plus particulièrement son module de génération de clés de session sécurisée MGC. Ce canal de communication sera établi, au travers du module intermédiaire MI et du module de contrôle de connaissance MCC du module tiers de confiance MTC, avec une authentification forte selon une procédure de type défi-réponse dans le cadre d'un protocole de type « augmented PAKE » tel que par exemple ceux répondant à la norme IEEE P1363.2.

Afin de renforcer la résistance du procédé selon l'invention aux attaques du type homme du milieu les communications entre module intermédiaire MI et le module tiers de confiance MTC sont de préférence mais non nécessairement sécurisées. Cette liaison sécurisée est de préférences établie avec une authentification du module tiers de confiance MTC par un certificat émis dans le cas d'une infrastructure à clé publique (en anglais PKI). Parmi les protocoles susceptibles d'être utilisés pour la mise en place d'une telle liaison entre le module intermédiaire MI et le module tiers de confiance MTC et, ici plus particulièrement, le module de contrôle de connaissance MCC, il est possible de citer le protocole TLS pour « Transport Layer Security » en anglais, anciennement appelé SSL pour « Secure Sockets Layer » en anglais.

Après mise en place de la carte CP dans le lecteur LC et initiation du processus d'accès à une ressource sécurisée de la carte à puce CP, il est procédé à l'authentification de la carte à puce CP par la mise en place d'une liaison sécurisée avec authentification mutuelle entre la carte à puce CP et le module tiers de confiance MTC et ici son module de contrôle de connaissance. Dans le cas de la mise en oeuvre d'une carte à puce CP conforme aux normes IS07816 et ISO 7816-4, l'authentification mutuelle résulte par exemple de la mise place d'une liaison sécurisée utilisant les fonctionnalités de messages sécurisés de ladite norme, en anglais « methods for secure messaging ». Dans le cas d'une carte à puce de type IAS dont le protocole et le fonctionnement est spécifié par le GIXEL (GROUPEMENT FRANÇAIS DES INDUSTRIES DE COMPOSANTS ET DE SYSTÈMES ÉLECTRONIQUES) il est possible de se reporter au document Spécification IAS ECC V1.01 et notamment à son chapitre 5.2.2.2.2 intitulé Etapes d'authentification.

Ainsi, le module intermédiaire MI adresse, dans une étape 1 une demande de défi à la carte à puce CP qui, dans une étape 2, envoie un défi. Un tel défi est par exemple un nombre aléatoire RND.CP, sur 8 octets, généré par la carte à puce CP.

Dans une étape 3, le module intermédiaire MI relaye au module de contrôle de connaissance MCC, ce défi en y associant l'identification ID.CP de la carte à puce CP. Le module de contrôle de connaissance MCC achemine, dans une étape 4, la demande de défi RND.CP et l'identification ID.CP de la carte à puce CP au module de génération de clé de session sécurisée MGC.

Le module de génération de clés de session sécurisée MGC comprend les secrets nécessaires à la génération des clés de session compatibles avec chacune des cartes à puce CP gérées par le module tiers de confiance MTC. Le module de génération de clés de session sécurisée comprend notamment les clés maîtres qui permettent de recalculer la clé secrète associée à chacune des cartes à puce CP. Le module de génération de clés de session sécurisée MGC calcule, à partir de l'identification ID.CP de la carte à puce CP, la clé secrète SK.CP de cette dernière pour générer à partir de cette clé secrète une réponse au défi dans une étape 5.

La réponse est par exemple formée de la manière suivante:
- le module MGC génère un nombre aléatoire RND.MGC sur 8 octets,
- le module MGC génère une clé de session aléatoire K.MGC,
- le module MGC concatène une chaine S comprenant:
   - le nombre aléatoire RND.MGC,
   - l'identifiant du module ID.MGC,
   - la demande défi RND.CP,
   - l'identifiant de la carte à puce ID.CP
   - la clé de session aléatoire K.MGC.
- le module MGC calcule une valeur DATA en chiffrant la chaine S au moyen de la clé secrète SK.CP
- le module MGC calcule une valeur MAC à partir de DATA en utilisant la clé sécrète SK.CP dans le cadre d'un algorithme HMAC pour en anglais « Hash-based Message Authentication Code » tel que définit le document RFC2104. Parmi les algorithmes susceptibles d'être utilisés, il est possible de citer SHA1, ou encore SHA256.

Dans une étape 6, la réponse au défi, formée de DATA et MAC, est transmise au module de contrôle de connaissance MCC qui l'adresse dans une étape 7 au module intermédiaire MI. Dans une étape 8, le dit module intermédiaire MI achemine, à la carte à puce CP, la réponse au défi.

Dans une étape 9, la carte à puce CP calcule alors, à partir de la réponse au défi, d'une part, un secret partagé et, d'autre part, une réponse de secret partagé. La carte à puce CP calcule également des clés de session de chiffrement et d'intégrité à partir du secret partagé. Pour se faire la carte à puce CP effectue les opérations suivantes :
- la carte à puce CP vérifie l'intégrité de la valeur DATA au moyen de la valeur MAC et de sa clé secrète SK.CP
- la carte à puce CP déchiffre, au moyen de sa clé sécrète SK.CP, la valeur DATA pour obtenir les données : RND.MGC ; ID.MGC; RND.CP ; ID.CP; K.MGC.
- la carte à puce vérifie que les valeurs RND.CP ; ID.CP correspondent bien aux valeurs qu'elle a émises.

En cas de vérification positive il est mis en oeuvre la séquence suivante:
- la carte à puce CP enregistre la valeur K.MGC,
- la carte à puce CP génère et enregistre une clé de session aléatoire K.CP,
- la carte à puce CP concatène une chaine S' comprenant:
   - le nombre aléatoire RND.MGC,
   - l'identifiant du module ID.MGC,
   - la demande défi RND.CP,
   - l'identifiant de la carte à puce ID.CP
   - la clé de session aléatoire K.CP.
- la carte à puce CP calcule une valeur DATA' en chiffrant la chaine S'au moyen de la clé secrète SK.CP
- la carte à puce CP calcule une valeur MAC' à partir de DATA 'en utilisant la clé sécrète SK.CP dans le cadre de l'algorithme HMAC utilisé par le module MGC.

La réponde de secret partagé est alors formé par DATA' et MAC'.

Dans une étape 10, la carte à puce CP adresse au module intermédiaire MI la réponse de secret partagé qui la répercute dans une étape 11 au module de contrôle de connaissance MCC, lequel la relaye au module de gestion des clés de cessions sécurisée MGC dans une étape 12.

Dans une étape 13, le module de gestion des clés de cessions sécurisée MGC procède à la vérification de la réponse de secret partagée. Pour ce faire il est mis en oeuvre les opérations suivantes :
- le module de gestion des clés de cessions sécurisée MGC vérifie l'intégrité de la valeur DATA' à partir de la valeur MAC',
- le module de gestion des clés de cessions sécurisée MGC déchiffre, au moyen de la clé sécrète SK.CP, la valeur DATA' pour obtenir les données : RND.MGC; ID.MGC; RND.CP; ID.CP; K.CP.
- le module de gestion des clés de cessions sécurisée MGC que les valeurs RND.MGC ; ID.MGC correspondent bien aux valeurs qu'il a émises.

En cas de vérification positive, le module de gestion des clés de cessions sécurisée MGC enregistre la clé de session aléatoire K.CP émise par la carte à puce CP et conclut à l'authentification de la carte à puce CP. Dans une étape 14 le module de gestion des clés de session sécurisée émet à destination du module de contrôle de connaissance MCC un message d'authentification positive de la carte puce CP. Ce message est alors relayé, dans une étape 15, par le module de contrôle de connaissance MCC à destination du module intermédiaire MI

Suite à la réception du message d'authentification positive, le module intermédiaire MI requiert, dans une étape 16, une saisie du code identifiant PIN par l'utilisateur U. Bien entendu cas de réception d'un message autre que d'identification positive le module intermédiaire n'effectue aucune action. Dans une étape 17, l'utilisateur U procède à la saisie du code identifiant PIN. Cette saisie peut être effectuée au moyen du clavier C de l'unité locale UL. Toutefois, afin d'éviter les risques de fuite par écoute des codes ASCII envoyés par le clavier à l'unité locale, le module intermédiaire MI affiche à l'écran E un clavier virtuel CV qui peut être numérique ou alphanumérique et sur lequel l'utilisateur choisit les caractères de son code identifiant PIN au moyen de la souris S. Le module intermédiaire MI pourra alors être adapté pour ne pas être en mesure de recevoir le code des touches du clavier C de manière à en neutraliser l'usage pour la saisie du code identifiant PIN.

Une fois la saisie du code identifiant PIN achevée, le module intermédiaire MI va chercher à obtenir du module tiers de confiance MTC les informations nécessaires à la communication sous une forme sécurisée du code identifiant PIN à la carte à puce.

Pour ce faire, il est établi un canal sécurisé de communication selon un protocole à divulgation nulle de connaissance (en anglais Zero-Knowledge protocol) entre le module intermédiaire MI et le module tiers de confiance MTC.

Afin de commencer la procédure d'obtention d'au moins une clé de session sécurisée, dans une étape 18 le module intermédiaire MI envoie dans le cadre du protocole à divulgation nulle de connaissance une preuve P de la connaissance du code identifiant PIN au module tiers de confiance MTC qui en assurera le traitement par le module de contrôle de connaissance MCC. La preuve P envoyée est par exemple un élément calculé à partir du code identifiant PIN, l'algorithme de calcul de cet élément de preuve étant conçu pour ne pas permettre une découverte du code identifiant PIN par calcul inverse. De plus, afin de conférer un caractère non rejouable ou à usage unique à la preuve de connaissance cette dernière est de préférence associée deux nombres aléatoires, l'un généré par le module intermédiaire MI et l'autre par le module de contrôle de connaissance MCC. L'échange de ces nombres aléatoires peut se faire dans l'étape 18, celle-ci comprenant alors un aller-retour nécessaire à cela avant l'envoi de la preuve de possession. Dans une optimisation du processus, l'échange de ces nombres aléatoires peut aussi être intégré aux étapes 11 et 15.

Dans une étape 19, le module de contrôle de preuve de connaissance MCC vérifie la validité de la preuve de connaissance. A cet effet, le module de contrôle de connaissance MCC comprend un enregistrement du code identifiant PIN ou un élément vérificateur permettant de s'assurer que la preuve de connaissance est correcte sans avoir connaissance du code identifiant PIN lui-même. Dans une forme préférée de l'invention, le module de contrôle de connaissance MCC ne comprendra pas d'enregistrement du code identifiant PIN.

En cas de validité de la preuve de connaissance, le module tiers de confiance MTC et, plus particulièrement, son module de contrôle de connaissance MCC adresse un message de contrôle positif, dans une étape 20, au module intermédiaire MI.

Ce message de contrôle positif prend, de préférence, la forme d'un message intégrant une valeur secrète chiffrée que le module de contrôle de connaissance MCC n'a pu calculer que s'il possédait les éléments de vérification de la preuve de possession envoyé par le module intermédiaire MI. II a donc aussi valeur d'authentification du module de contrôle de connaissance MCC auprès du module intermédiaire MI. Une fois déchiffrée, cette valeur secrète qui est maintenant partagée entre les deux modules peut être utilisée comme clé secrète partagée pour chiffrer de futurs éléments échangés entre eux si nécessaire. Les opérations, qui viennent d'être, décrites peuvent être implémentée selon le protocole SRP-SHA1 décrit dans la documentation RFC2945, qui est le protocole de type Augmented-PAKE le plus couramment utilisé. De plus, en partant d'une implémentation sur la base de SRP-SHA1, l'homme du métier sait substituer à l'algorithme SHA1 l'algorithme SHA256 ou un autre algorithme analogue pour obtenir un meilleur niveau de sécurité.

Afin d'éviter une analyse extérieure du mode de fonctionnement du module tiers de confiance MTC, ce dernier est, de préférence, paramétré pour adresser un message de contrôle en retour de chaque envoi d'une preuve de connaissance quel que soit le résultat du contrôle. Dans le même sens, ce message de contrôle est adressé dans un délai indépendant du résultat du contrôle.

Dans une étape 21, le module de contrôle de connaissance MCC envoie, au module de génération de clés de session sécurisée MGC une requête d'export de clés de session. Le module de génération de clés de session sécurisée MGC calcule, dans une étape 22, les clés de session de chiffrement SKENC et d'intégrité SKMAC à partir des clés de session aléatoires K.CP et K.MGC générées dans le cadre de l'authentification de la carte à PC. Une méthode de génération des clés de session SKENC et SKMAC est notamment décrite au chapitre 7.14 de la Spécification IAS ECC V1.01 précitée.

Dans une étape 22, le module de génération des clés de session sécurisée MGC envoie les clés de session de chiffrement SKENC et d'intégrité SKMAC au module de contrôle de connaissance MCC qui les acheminera dans une étape 23 au module intermédiaire MI. Dans une forme préférée de l'invention, le module de contrôle de connaissance MCC utilise la clé secrète partagée avec le module intermédiaire MI pour chiffrer les clés de session, et garantir dans tous les cas de figure qu'un intermédiaire de type homme du milieu ne puisse pas prendre connaissance des clés de session.

Le module intermédiaire MI utilise alors la clé de chiffrement SKENC pour chiffrer le code identifiant PIN sous une forme de sécurisée et formate un message à destination de la carte à puce CP au moyen de la clé de session d'intégrité SKMAC. Dans une étape 24, le module intermédiaire MI envoie ce message formaté à la carte à puce.

Dans la mesure où les différents échanges des étapes 2 à 15 et 18 à 24 n'ont pas été corrompus, la carte à puce CP pourra à partir des clés de chiffrement SKENC et d'intégrité SKMAC vérifier l'intégrité du message reçu en provenance du module intermédiaire MI et déchiffrer le code identifiant PIN.

La carte à puce CP peut alors contrôler le code identifiant et en cas de contrôle positif activer la ressource protégée associée au code identifiant PIN et/ou autoriser l'accès à cette ressource protégée.

II apparaît donc que le procédé selon l'invention permet de lutter au maximum contre une appropriation malintentionnée du code identifiant PIN.

II est à noter que dans la mesure où les clés de session sécurisées SKENC et SKMAC sont générées à partir des clés de cession aléatoires K.CP et K.MGC pour le temps de la session courante, les clés de session sécurisées SKENC et SKMAC sont non rejouables et peuvent être transmises au module de contrôle de connaissance MCC et au module intermédiaire MI sans risque pour les secrets permanents de la carte à puce PC. De même, il n'est pas strictement nécessaire de mettre en oeuvre deux clés distinctes pour le chiffrement et pour le contrôle d'intégrité. En effet il peut être utilisé une même clé pour assurer le chiffrement et le contrôle d'intégrité. II peut également être mis en oeuvre à algorithme de chiffrement à clé unique qui garantit l'intégrité des données chiffrées tel que l'algorithme AES-GCM.

Afin de renforcer plus encore la sécurité du système, le module tiers de confiance MTC peut être adapté pour garder une trace des différentes connexions associées à chaque carte à puce CP. À cet effet, le module de contrôle de connaissance MCC pourra comprendre ou être associé à un module de détection des fraudes MDF adapté pour enregistrer le nombre de connexions associées à chaque carte à puce CP ainsi que le résultat du contrôle de connaissance du code identifiant PIN pour chaque connexion. Le module de détection des fraudes MDF sera alors utilisé pour autoriser ou interdire une nouvelle connexion pour une carte à puce donnée en fonction des valeurs enregistrées. À cet égard, le module de détection des fraudes MDF pourra être adapté pour interdire ou pour commander au module MCC d'interdire toute nouvelle connexion à partir d'un nombre donné de connexions associées à la transmission d'un code identifiant PIN erroné.

Le module de détection des fraudes MDF peut également être adapté pour mettre en oeuvre des règles de sécurité visant à identifier des requêtes en grand nombre émises par des systèmes automatisés encore des requêtes en nombre trop élevé pour correspondre à un usage normal de dispositif personnel sécurisé ou de la carte à puce CP.

Par ailleurs, le mode de génération des clés de session sécurisées partagées décrit précédemment ne constituent qu'une forme possible de mise en oeuvre de l'invention et il est possible de mettre en oeuvre d'autres méthode connues de l'homme du métier pour établir une clé de session partagée non rejouable à partir d'un secret partagé détenu par la carte à puce CP et le module tiers de confiance MTC. Parmi ces méthodes il est possible de citer l'algorithme Diffie-Helman.

Bien entendu, diverses autres modifications peuvent être apportées à l'invention dans le cadre des revendications annexées

## Revendications

1. Procédé d'accès au moyen d'un code identifiant (PIN) associé à un utilisateur (U) à au moins une ressource protégée d'un dispositif personnel sécurisé (CP) communicant avec une unité locale (UL) contrôlée par l'utilisateur (U), procédé d'accès comprenant les étapes suivantes :
- mise en oeuvre par l'unité locale (UL) d'un module intermédiaire (MI) de saisie du code identifiant (PIN),
- authentification, via le module intermédiaire (MI), du dispositif personnel sécurisé (CP) par le module tiers de confiance (MTC),
- en cas d'authentification positive du dispositif personnel sécurisé (CP) par le module tiers de confiance (MTC) :
- requête, par le module intermédiaire(MI), de saisie du code identifiant (PIN) par l'utilisateur(U),
- obtention par le module intermédiaire (MI) auprès du module tiers de confiance (MTC) d'au moins une clé de session sécurisée, faisant intervenir les étapes suivantes :
- envoi par le module intermédiaire (MI) à destination du module tiers de confiance (MTC) d'une preuve de connaissance du code identifiant (PIN) différente du code identifiant (PIN) et à usage unique,
- en cas de reconnaissance, par le module tiers de confiance (MTC), de la validité de la preuve de connaissance du code identifiant (PIN), génération, au moins par le module tiers de confiance (MTC), d'au moins une clé de session sécurisée au moyen d'informations secrètes associées au dispositif personnel sécurisé (CP),
- envoi de chaque clé de session sécurisée au module intermédiaire (MI).
- envoi au dispositif personnel sécurisé (CP), par le module intermédiaire (MI), du code identifiant (PIN) sous une forme sécurisée au moyen de chaque clé de session sécurisée.

2. Procédé d'accès selon la revendication 1, **caractérisé en ce que** le module intermédiaire (MI) communique avec le module tiers de confiance (MTC) dans le cadre d'une liaison sécurisée.

3. Procédé d'accès selon l'une des revendications précédentes, **caractérisé en ce que** l'authentification du dispositif personnel sécurisé (CP) est effectuée dans le cadre d'une authentification réciproque du dispositif personnel sécurisé (CP) et du module tiers de confiance selon un protocole de challenge cryptographique de type défi-réponse.

4. Procédé d'accès selon l'une des revendications précédentes, **caractérisé en ce que** la transmission de la preuve de connaissance est effectuée selon un protocole de type à divulgation nulle de connaissance.

5. Procédé d'accès selon l'une des revendications précédentes, caractérisé en ce le module tiers de confiance (MTC) comprend un module (MCC) de contrôle de la connaissance du code identifiant (PIN) et un module de génération de clé de session sécurisée (MGC).

6. Procédé d'accès selon la revendication 5, **caractérisé en ce que** le module (MCC) de contrôle de la connaissance du code identifiant (PIN) communique avec le module de génération de clés de session sécurisé (MGC) via une liaison sécurisée à authentification mutuelle.

7. Procédé d'accès selon la revendication 5 ou 6, **caractérisé en ce que** le module intermédiaire (MI) communique uniquement avec le module de contrôle de connaissance (MCC) du module tiers de confiance (MTC).

8. Procédé d'accès selon l'une des revendications 5 à 7, **caractérisé en ce que** le module tiers de confiance (MTC) est en partie au moins intégré dans un module matériel de sécurité (HSM).

9. Procédé d'accès selon l'une des revendications 5 à 8, **caractérisé en ce que** le module de génération de clés de session sécurisée (MGC) et/ou le module de contrôle de connaissance (MCC) est intégré dans un module matériel de sécurité (HSM).

10. Procédé d'accès selon l'une des revendications 8 à 9, **caractérisé en ce que** le module de contrôle de connaissance (MCC) et le module de génération de clés de session (MGC) sont implantés chacun sur deux serveurs distincts.

11. Procédé d'accès selon l'une des revendications précédentes **caractérisé en ce que** la saisie du code identifiant (PIN) est effectuée au moyen d'une interface graphique affichant un clavier virtuel (CV) sur un écran (E) de l'unité locale (UL) et d'une interface de pointage (S) permettant à l'utilisateur (U) de sélectionner des caractères du clavier virtuel (CV).

12. Dispositif informatique comprenant des moyens de communication avec un dispositif personnel sécurisé (CP), des moyens d'interface homme machine (C, E, S) et des moyens de communication avec un module tiers de confiance (MTC) **caractérisé en ce que** le dispositif informatique comprend un module intermédiaire (MI) adapté pour mettre en oeuvre le procédé d'accès selon l'une des revendication 1 à 11.
